(19) 

Europäisches
Patentamt
European
Patent Office
Office européen
des brevets

(11) **EP 4 538 509 A1**

(12) **EUROPEAN PATENT APPLICATION**
published in accordance with Art. 153(4) EPC

(43) Date of publication:
**16.04.2025 Bulletin 2025/16**

(21) Application number: **22940986.7**

(22) Date of filing: **07.05.2022**

(51) International Patent Classification (IPC):
**F01N 11/00** (2006.01)   **F01N 3/20** (2006.01)

(52) Cooperative Patent Classification (CPC):
**F01N 3/20; F01N 11/00**

(86) International application number:
**PCT/CN2022/091373**

(87) International publication number:
**WO 2023/216015 (16.11.2023 Gazette 2023/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Weichai Power Co., Ltd.
Weifang, Shandong 261061 (CN)**

(72) Inventor: **TANG, Bo
Weifang, Shandong 261061 (CN)**

(74) Representative: **Ipside
6, Impasse Michel Labrousse
31100 Toulouse (FR)**

(54) **METHOD FOR PREDICTING REMAINING SERVICE LIFE OF UREA PUMP AND RELATED APPARATUS**

(57)    Provided is a method for predicting the remaining service life of a urea pump, comprising: monitoring a pressure buildup duration (S41); acquiring a working condition degradation duration according to the pressure buildup duration (S42); and acquiring a difference between calibrated remaining service life of the urea pump and a degradation duration and using same as a prediction result of the remaining service life of the urea pump (S43). The pressure buildup duration is a duration of a successful pressure buildup process of an engine configured with a urea pump in a latest driving cycle; the successful pressure buildup process is a process during which a pump pressure value of the urea pump rises from a first preset value to a second preset value; the working condition degradation duration is positively correlated with the pressure buildup duration, so that a longer working condition degradation duration represents a greater degree of degradation in the service life of the urea pump caused by a working condition; the calibrated remaining service life is a difference between the calibrated service life of the urea pump and a running duration of the urea pump; and the degradation duration comprises the working condition degradation duration. According to the method, a highly accurate and credible prediction result of the remaining service life of the urea pump is obtained. Also provided are an apparatus for predicting the remaining service life of a urea pump, a prediction device, and a readable storage medium.

S41

Monitor a pressure build-up duration

S42

Acquire an operating condition degradation duration based on the pressure build-up duration

S43

Subtract a degradation duration from a calibrated remaining service life of a urea pump to obtain a prediction result of a remaining service life of the urea pump

**FIG. 4**

EP 4 538 509 A1

## Description

### FIELD

The present disclosure relates to the technical field of engines, and in particular to a method for predicting a remaining service life of a urea pump, and a related apparatus.

### BACKGROUND

An engine is a core component for a motor vehicle, and the safety of the engine is an important factor for the security, reliability and economy of operation of the motor vehicle. Predicting a remaining service life of a urea pump is a crucial measure to enhance the security of the engine and prevent the performance degradation of components. However, the prediction of the remaining service life of the urea pump is currently only based on a theoretical research concerning a calibrated service life. Due to the complex, variable and unpredictable operating environment, the prediction accuracy based on the conventional theoretical research is generally low. Therefore, how to improve the accuracy of predicting the remaining service life of the urea pump is a problem to be urgently solved by those skilled in the art.

### SUMMARY

A method for predicting a remaining service life of a urea pump, and a related apparatus are provided according to the present disclosure, to improve the accuracy of a prediction result of the remaining service life of the urea pump.

A method for predicting a remaining service life of a urea pump includes:

monitoring a pressure build-up duration, where the pressure build-up duration is a duration of a successful pressure build-up process during a latest driving cycle of an engine provided with the urea pump, and the successful pressure build-up process is a process during which a pump pressure value of the urea pump increases from a first preset value to a second preset value;

acquiring an operating condition degradation duration based on the pressure build-up duration, where the operating condition degradation duration is positively correlated with the pressure build-up duration; and

subtracting a degradation duration from a calibrated remaining service life of the urea pump to obtain a prediction result of the remaining service life of the urea pump, where the calibrated remaining service life is obtained by subtracting an operating duration of the urea pump from a calibrated service life of the urea pump, and the degradation duration includes the operating condition degradation duration.

In an embodiment, the acquiring an operating condition degradation duration based on the pressure build-up duration includes:

acquiring a set of historical pressure build-up durations, where the historical pressure build-up durations are durations of successful pressure build-up processes during historical driving cycles of the engine;

determining a historical pressure build-up duration corresponding to a preset quantile in the set of the historical pressure build-up durations as a pressure build-up threshold; and

acquiring the operating condition degradation duration based on the pressure build-up duration in response to the pressure build-up duration exceeding the pressure build-up threshold.

In an embodiment, the acquiring the operating condition degradation duration based on the pressure build-up duration in response to the pressure build-up duration exceeding the pressure build-up threshold includes:

acquiring an operating condition degradation factor based on the pressure build-up duration, where the operating condition degradation factor is positively correlated with the pressure build-up duration; and

determining a product of the operating condition degradation factor and a service life of the urea pump per driving cycle as the operating condition degradation duration, where the service life of the urea pump per driving cycle is determined based on the calibrated service life and a preset calibrated start-stop count, and the calibrated start-stop count indicates a maximum value of the start-stop count throughout a lifecycle of the urea pump.

In an embodiment, the method further includes:

acquiring a B10 service life of the urea pump; and

correcting the B10 service life based on a Weibull distribution function and historical data to obtain the calibrated service life of the urea pump.

In an embodiment, the degradation duration further includes a maintenance degradation duration, and the method further includes:

acquiring a preset parameter interval, where the parameter interval includes at least one of a mileage interval, an operating duration interval and a duration interval since factory shipment, and any one of the parameter intervals indicate a usage degree of the urea pump;

determining an interval within a historical parameter interval excluding a value of a parameter in a maintenance record as a target parameter interval, where the historical parameter interval includes an interval with an upper limit less than a real-time value, and the maintenance record includes the value of the parameter corresponding to a maintenance time instant;

determining a maintenance degradation factor of the target parameter interval based on the usage degree indicated by the target parameter interval, where the maintenance degradation factor is positively correlated with the usage degree;

determining an interval degradation duration of the target parameter interval based on the maintenance degradation factor of the target parameter interval; and

summing up the interval degradation durations of all the target parameter intervals to obtain the maintenance degradation duration.

In an embodiment, the determining an interval within a historical parameter interval excluding a value of a parameter in a maintenance record as a target parameter interval includes:

monitoring the real-time value of the parameter, where the parameter includes at least one of a mileage, an operating duration and a duration since factory shipment;

acquiring the maintenance record in response to the real-time value of any one of the parameters reaching the upper limit of the corresponding parameter interval; and

determining the interval within the historical parameter interval excluding the value of the parameter in the maintenance record as the target parameter interval.

In an embodiment, the method further includes:

generating and sending a preset alarm command in response to the real-time value of the parameter meeting a preset alarm condition, where

the alarm condition includes that the parameter interval between the real-time value of the parameter and an upper limit of a real-time parameter interval is less than a preset interval threshold, and the real-time parameter interval is a parameter interval including the real-time value of the parameter.

In an embodiment, the determining a maintenance degradation factor of the target parameter interval based on the usage degree indicated by the target parameter interval includes:

sorting the parameter intervals based on the upper limits of the intervals in an ascending order to obtain an interval sequence, and determining an ordinal position of the target parameter interval within the interval sequence as the usage degree of the target parameter interval; and

acquiring the maintenance degradation factor of the target parameter interval based on the usage degree of the target parameter interval, where the maintenance degradation factor is positively correlated with the usage degree.

In an embodiment, the method further includes:

monitoring a real-time start-stop count of the urea pump,

where the subtracting a degradation duration from a calibrated remaining service life of the urea pump to obtain a prediction result of the remaining service life of the urea pump includes:

subtracting the degradation duration from the calibrated remaining service life of the urea pump to obtain the prediction result of the remaining service life of the urea pump in response to the real-time start-stop count of the urea pump not exceeding the calibrated start-stop count,

where the method further includes:

acquiring the prediction result of the remaining service life of the urea pump based on the real-time start-stop count of the urea pump and a difference obtained by subtracting the degradation duration from the calibrated remaining service life in response to the real-time start-stop count exceeding the calibrated start-stop count.

An apparatus for predicting a remaining service life of a urea pump includes a pressure build-up duration monitoring unit, an operating condition degradation unit and a prediction result acquisition unit. The pressure build-up duration monitoring unit is configured to monitor a pressure build-up duration, where the pressure build-up duration is a duration of a successful pressure build-up process during a latest driving cycle of an engine provided with a urea pump, and the successful pressure build-up process is a process during which a pump pressure value of the urea pump increases from a first preset value to a second preset value. The operating condition degradation unit is configured to acquire an operating condition degradation duration based on the pressure build-up duration, where the operating condition degradation duration is positively correlated with the pressure build-up duration. The prediction result acquisition unit is configured to subtract a degradation duration from a calibrated remaining service life of the urea pump to obtain a prediction result of the remaining service life of the urea pump, where the calibrated remaining service life is obtained by subtracting an operating duration of the urea pump from a calibrated service life of the urea pump, and the degradation duration includes the operating condition degradation duration.

A device for predicting a remaining service life of a urea pump includes a memory and a processor. The memory is configured to store a program. The processor is configured to execute the program to perform the method for predicting a remaining service life of a urea pump.

A readable storage medium storing a computer program is provided. The computer program performs, when being executed by a processor, the method for predicting a remaining service life of a urea pump.

It can be seen from the above technical solution that with the method for predicting a remaining service life of a urea pump, and the related apparatus are provided according to the embodiments of the present disclosure, a pressure build-up duration is monitored, an operating condition degradation duration is acquired based on the pressure build-up duration, and a degradation duration is subtracted from a calibrated remaining service life of the urea pump to obtain a prediction result of the remaining service life of the urea pump. The pressure build-up duration is a duration of a successful pressure build-up process during a latest driving cycle of an engine provided with a urea pump, and the successful pressure build-up process is a process during which a pump pressure value of the urea pump increases from a first preset value to a second preset value. It can be seen that a longer pressure build-up duration indicates a greater degree of degradation for the service life of the urea pump caused by an operating condition. The operating condition degradation duration is positively correlated with the pressure build-up duration, and thus a longer operating condition degradation duration indicates a greater degree of degradation for the service life of the urea pump caused by the operating condition. Moreover, the calibrated remaining service life is obtained by subtracting an operating duration of the urea pump from a calibrated service life of the urea pump, and the degradation duration includes the operating condition degradation duration. Therefore, the method considers the influence of the operating condition on the degradation of the service life of the urea pump, thus obtaining a highly accurate and highly credible prediction result of the remaining service life of the urea pump.

**BRIEF DESCRIPTION OF THE DRAWINGS**

For clearer illustration of the technical solutions according to embodiments of the present disclosure or conventional technology, drawings to be used in descriptions of the embodiments or the conventional technology are briefly described hereinafter. Apparently, the drawings in the following descriptions are only some embodiments of the present disclosure, and other drawings may be obtained by those skilled in the art based on the provided drawings without any creative effort.

FIG. 1 is a flowchart of an implementation of a method for predicting a remaining service life of a urea pump according to an embodiment of the present disclosure;

FIG. 2 is a flowchart of an implementation of an early warning method according to an embodiment of the present disclosure;

FIG. 3 is a schematic structural diagram of a system for predicting a remaining service life of a urea pump according to an embodiment of the present disclosure;

FIG. 4 is a flowchart of a method for predicting a remaining service life of a urea pump according to an embodiment of the present disclosure;

FIG. 5 is a schematic structural diagram of an apparatus for predicting a remaining service life of a urea pump according to an embodiment of the present disclosure; and

FIG. 6 is a schematic structural diagram of a device for predicting a remaining service life of a urea pump according to an embodiment of the present disclosure.

## DETAILED DESCRIPTION

The technical solutions in the embodiments of the present disclosure are described clearly and completely hereinafter in conjunction with the drawings in the embodiments of the present disclosure. It is apparent that the described embodiments are only a part of the embodiments of the present disclosure and not all of the embodiments. Based on the embodiments of the present disclosure, all other embodiments obtained by those skilled in the art without any creative work fall into the protection scope of the present disclosure.

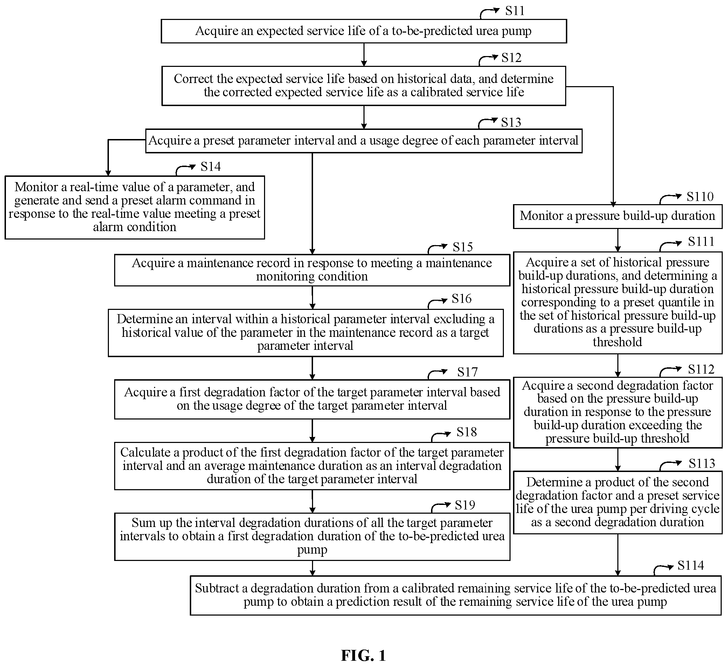

A method for predicting a remaining service life of a urea pump according to the embodiments of the present disclosure is applied to, but is not limited to predict a remaining service life of a urea pump arranged in an automotive engine. It should be noted that the present disclosure does not limit a model of the urea pump. FIG. 1 shows a flowchart of an implementation of the method for predicting a remaining service life of a urea pump according to an embodiment of the present disclosure by taking a to-be-predicted urea pump being a urea pump as an example. As shown in FIG. 1, the method includes the following S11 to S19 and S110 to S114.

In S11, an expected service life of a to-be-predicted urea pump is acquired.

In the embodiment, the expected service life indicates a preset theoretical service life of the to-be-predicted urea pump. The expected service life of the to-be-predicted urea pump is a B10 service life of a urea pump product to which the to-be-predicted urea pump belongs. The B10 service life of the urea pump product is calibrated based on historical failure data of the urea pump product. The meaning of the B10 service life for any type of product is that: under a preset operating condition, after products operate for a duration indicated by the B10 service life, it is expected that 10% of the products fail. It should be noted that the urea pump product may be specified down to the model of the urea pump.

In the embodiment, the B10 service life of the to-be-predicted urea pump may be acquired by querying reliability parameters of the urea pump product to which the to-be-predicted urea pump belongs.

In S12, the expected service life is corrected based on historical data, and the corrected expected service life is determined as a calibrated service life.

In the embodiment, the historical data at least includes an actual service life of the urea pump of a target model (i.e., a model to which the to-be-predicted urea pump belongs). The historical data is obtained by querying an engine identification.

Based on a statistical research on the historical data including the actual service life of the urea pump of the target model, an objective pattern of the service life is obtained as the service life of the urea pump following a Weibull distribution. In the embodiment, the expected service life (that is, the B10 service life) is corrected based on a Weibull distribution function and a preset estimation algorithm (such as a least squares algorithm or a maximum likelihood estimation algorithm) to obtain the calibrated service life.

In an embodiment, the Weibull distribution function is shown as the following equation (1):

$$f(t) = \frac{\beta}{\eta}\left(\frac{t-\gamma}{\eta}\right)^{\beta-1} e^{-\left(\frac{t-\gamma}{\eta}\right)^{\beta}} \qquad (1)$$

In equation (1), $f(t)$ represents the corrected expected service life, that is, the calibrated service life. $t$ represents a variable of the Weibull distribution function, indicating the actual service life of the urea pump (obtained from the historical data). $\gamma$ represents a location parameter, whose value is the expected service life of the urea pump, that is, the B10 service life. $\eta$ represents a scale parameter. $\beta$ represents a shape parameter. It should be noted that the method for calculating the calibrated service life based on the Weibull distribution function and the preset estimation algorithm may be referred to the conventional technology.

According to the above description, the calibrated service life is obtained based on the historical data and the B10 service life, thus improving the accuracy of a prediction result for the actual service life.

In S13, a preset parameter interval and a usage degree of each parameter interval are acquired.

In the embodiment, the parameter interval includes at least one of a mileage interval, an operating duration interval and a duration interval since factory shipment. Any one of the parameter intervals indicate a usage degree of the to-be-predicted urea pump. The mileage interval is acquired based on a preset maintenance mileage, starting from 0, and each maintenance mileage is determined as one mileage interval. The operating duration interval is acquired based on a preset first maintenance duration, starting from 0, and each first maintenance duration is determined as one operating duration interval. The duration interval since factory shipment is acquired based on a preset second maintenance duration, starting from 0, and each second maintenance duration is determined as one duration interval since factory shipment.

Taking the mileage interval as an example, if the maintenance mileage is M, the mileage interval includes: $[(i-1)\times M, i\times M]$. It may be understood that the parameter interval with a larger i indicates a higher usage degree of the to-be-predicted urea pump.

It should be noted that any one of the parameter intervals is determined based on the mileage interval, the operating duration interval and the duration interval since factory shipment.

In the embodiment, the usage degree is a quantized value of the usage degree of the to-be-predicted urea pump. Various parameter intervals are sorted based on upper limits of the intervals in an ascending order to obtain an interval sequence, and an ordinal position of the parameter interval within the interval sequence is determined as the usage degree of the parameter interval. For example, the usage degree of $[(i-1)\times M, i\times M]$ is i.

In S14, a real-time value of the parameter is monitored, and a preset alarm command is generated and sent in response to the real-time value meeting a preset alarm condition.

In the embodiment, the parameter includes at least one of a mileage, an operating duration and a duration since factory shipment. In an embodiment, the parameter includes the mileage, the operating duration and the duration since factory shipment.

The mileage is a cumulative mileage of a vehicle to which the to-be-predicted urea pump belongs. The operating duration is a cumulative operating duration of the to-be-predicted urea pump. The duration since factory shipment is a time interval between a current time instant and a time instant since factory shipment of the to-be-predicted urea pump. It should be noted that there are various methods to acquire the real-time value of the parameter. For example, the mileage and the operating duration may be read from a vehicle control system, and the duration since factory shipment may be acquired from the engine identification. Details may be referred to the conventional technology.

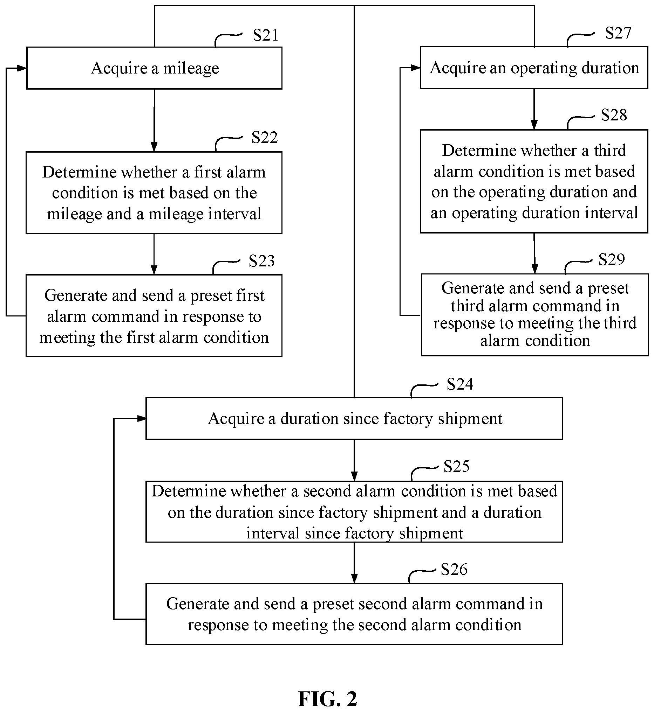

It should be noted that the process of generating and sending the preset alarm command is shown in the flowchart in FIG. 2.

In S15, a maintenance record is acquired in response to meeting a maintenance monitoring condition.

In the embodiment, the maintenance record includes the value of the parameter corresponding to a maintenance time instant. The maintenance monitoring condition includes any one real-time value reaching the upper limit of the corresponding parameter interval.

In the embodiment, the maintenance record is acquired from a product after-sales service system. It should be noted that a data interaction chain between the maintenance record and a vehicle after-sales service system is pre-established, and the maintenance record data is uploaded in a real time manner. When maintenance is performed on the engine, an additional maintenance record is generated. For example, the maintenance record indicates that maintenance is performed on the engine when the mileage reaches 59700 kilometers.

In S16, an interval within a historical parameter interval excluding a historical value of the parameter in the maintenance record is determined as a target parameter interval.

In the embodiment, the historical parameter interval is an interval with the upper limit (the maximum value of the interval) less than the real-time value of the parameter. For example, if the parameter interval is the mileage interval and the real-time value of the mileage is 229000 kilometers, the historical mileage intervals include: [0, 60000], [60000, 120000], and [120000, 180000]. It is assumed that the value of the mileage corresponding to a first maintenance time instant in the maintenance record is 59700 kilometers and the value of the mileage corresponding to a second maintenance time instant is 179900 kilometers, the historical mileage interval [60000, 120000], excluding the values of the mileage corresponding to the maintenance time instants in the maintenance record, is determined as the target parameter interval, and the historical mileage intervals [0, 60000] and [120000, 180000], including the values of the mileage corresponding to the maintenance time instants in the maintenance record, are determined as maintenance parameter intervals. In other words, the target parameter interval is the historical parameter interval within which no maintenance has been performed.

In S 17, a first degradation factor of the target parameter interval is acquired based on the usage degree of the target parameter interval.

In the embodiment, the first degradation factor is positively correlated with the usage degree. In an embodiment, the first degradation factor is acquired according to the following equation (2):

$$\alpha_i = 1 - \frac{1}{e^i} \quad (2)$$

In equation (2), $\alpha_i$ represents the first degradation factor of the target parameter interval, $i$ represents the usage degree of the target parameter interval, $i \in [1,n]$, and n represents a maximum maintenance number, that is, a total maintenance number throughout a lifecycle of the urea pump. In an embodiment, n is equal to the number of the parameter interval. In addition, the value of n may be obtained based on the B10 service life (or the calibrated service life), for example,

$$n = \frac{LTB10_{mileage}}{M}$$, where $LTB10_{mileage}$ represents a calibrated mileage (i.e., a maximum expected mileage throughout the lifecycle of the urea pump, which may be a product of the B10 service life and a preset driving speed) obtained based on the calibrated service life, and $M$ represents the maintenance mileage.

It may be understood that an objective pattern summarized from the analysis of the actual service life and the maintenance record of the urea pumps in historical maintenance data is as follows.

When the real-time value of the parameter (such as the mileage or the operating duration) of the to-be-predicted urea pump is relatively small, the usage degree of the to-be-predicted urea pump is low, and the absence of maintenance causes a relatively small impact on the degradation of the service life of the urea pump. When the real-time value of the parameter of the to-be-predicted urea pump is relatively large, the usage degree of the to-be-predicted urea pump is high, and the absence of maintenance causes a relatively significant impact on the degradation of the service life of the urea pump, resulting in a greater degradation degree of the service life.

According to equation (2), since $\frac{1}{e^i}$ is a decreasing exponential function, the first degradation factor increases with the increase of the usage degree. It can be seen that a higher usage degree of the to-be-predicted urea pump indicated by the parameter interval indicates a greater first degradation factor of the parameter interval caused by the absence of maintenance within the parameter interval (that is, the maintenance record excludes any value within the parameter interval), consequently, the absence of maintenance within the parameter interval causes a greater degradation degree of the service life. Therefore, the first degradation factor of the target parameter interval is positively correlated with the degree of impact on the service life.

In S18, a product of the first degradation factor of the target parameter interval and an average maintenance duration is determined as an interval degradation duration of the target parameter interval.

In the embodiment, the average maintenance duration is an average value of the interval lengths of the operating duration intervals. Taking a target operating duration interval Qi as the target parameter interval as an example, the interval degradation duration $t_i$ of Qi is acquired according to the following equation (3):

$$t_i = \alpha_i * \Delta t \quad (3)$$

It should be noted that the interval length of the operating duration interval is a first maintenance duration, which is a fixed value. Alternatively, in other practical scenarios, the interval lengths of the parameter intervals may be different from each other. For example, the interval length of a parameter interval with a low usage degree is greater than that of a parameter interval with a high usage degree. In such case, the average maintenance duration may be acquired as the calibrated service life divided by the number of the parameter intervals (that is, the maximum maintenance number), for example, $\Delta t = \frac{RUL10}{n}$.

It is understood that the interval degradation duration is positively correlated with the first degradation factor. The interval degradation duration of the target parameter interval is used to indicate the degradation duration of the service life of the to-be-predicted urea pump due to the absence of maintenance within the target parameter interval. A larger first degradation factor indicates a longer degradation duration.

In S19, the interval degradation durations of all the target parameter intervals are summed up to obtain a first degradation duration of the to-be-predicted urea pump.

In the embodiment, the first degradation duration T1 of the to-be-predicted urea pump is calculated according to the following equation (4):

$$T1 = \sum_{j \in \varphi} t_j \quad (4)$$

In equation (4), $\varphi$ represents a set including usage degrees of all target parameter intervals, referred to as a target usage degree set.

In S110, a pressure build-up duration is monitored.

In the embodiment, the pressure build-up duration refers to a duration for which a pump pressure value increases from 12bar to 15bar after the to-be-predicted urea pump starts operating during a latest driving cycle, shown as the following equation (5):

$$Cycle\_Pressure\_Building_{t\text{-}1} = Pump\_Substatus_{t-1,15} - Pump\_Substatus_{t-1,12} \quad (5)$$

In equation (5), $Cycle\_Pressure\_Building_{t\text{-}1}$ represents the pressure build-up duration, $Pump\_Substatus_{t-1,12}$ represents a time instant when the pump pressure sub-state (the pump pressure value) is 12bar, and $Pump\_Substatus_{t-1,15}$ represents a time instant when the pump pressure sub-state (the pump pressure value) is 15bar.

It should be noted that during a time period indicated by the pressure build-up duration, the to-be-predicted urea pump operates normally and can achieve a preset system function, such as reducing emissions.

In S111, a set of historical pressure build-up durations is acquired, and a historical pressure build-up duration corresponding to a preset quantile in the set of historical pressure build-up durations is determined as a pressure build-up threshold.

In the embodiment, the historical pressure build-up durations are durations of the successful pressure build-up processes during historical driving cycles of the engine.

In the embodiment, a method for acquiring the pressure build-up threshold is: determining the historical pressure build-up duration corresponding to a 75% quantile as the pressure build-up threshold.

In S112, a second degradation factor is acquired based on the pressure build-up duration in response to the pressure build-up duration exceeding the preset pressure build-up threshold.

In the embodiment, in response to the pressure build-up duration exceeding the pressure build-up threshold, the second degradation factor is positively correlated with the pressure build-up duration, that is, a longer pressure build-up duration indicates a greater second degradation duration, indicating a larger second degradation factor.

In the embodiment, the pressure build-up threshold is acquired based on the historical pressure build-up data. The historical pressure build-up data includes a duration distribution of the historical pressure build-up durations. The historical pressure build-up durations are durations of successful historical pressure build-up processes of the urea pump. Based on the pressure build-up data, the historical pressure build-up durations follow a log-normal distribution as: $In(t_p) \sim N$ [0,1], where $t_p$ represents the historical pressure build-up duration. Based on this, the second degradation factor $\beta$ is acquired according to the following equation (6):

$$\beta = \begin{cases} 0 & Cycle\_Pressure\_Building_{t\text{-}1} \leq 75\,percentile \\ 1 - \dfrac{1}{\sqrt{2\Pi}} \exp^{[-\frac{1}{2}(InCPB)^2]} & Cycle\_Pressure\_Building_{t\text{-}1} > 75\,percentile \end{cases} \quad (6)$$

In equation (6), *CPB* (Cycle Pressure Building) represents the pressure build-up duration, and 75 *percentile* represents the pressure build-up threshold. In the embodiment, 75 *percentile* is equal to the historical pressure build-up duration corresponding to the 75% quantile.

According to equation (6), $\dfrac{1}{\sqrt{2\Pi}} \exp^{[-\frac{1}{2}(InCPB)^2]}$ represents a probability density when the variable is *CPB*. Therefore, based on the log-normal distribution pattern, a longer pressure build-up duration indicates a smaller value of $\dfrac{1}{\sqrt{2\Pi}} \exp^{[-\frac{1}{2}(InCPB)^2]}$ and a larger second degradation factor. That is, when the pressure build-up duration exceeds the pressure build-up threshold, the second degradation factor is positively correlated with the pressure build-up duration.

It should be noted that, as shown in equation (6), when the pressure build-up duration does not exceed the preset pressure build-up threshold, the second degradation factor $\beta$ is 0.

In S113, a product of the second degradation factor and a preset service life of the urea pump per driving cycle is determined as a second degradation duration.

In the embodiment, the service life of the urea pump per driving cycle is determined based on the calibrated service life and a calibrated start-stop count, where the calibrated start-stop count is a maximum value of the pre-calibrated start-stop count throughout the lifecycle of the urea pump.

In an embodiment, a quotient of the calibrated service life divided by the calibrated start-stop count is determined as the service life of the urea pump per driving cycle.

The service life of the urea pump per driving cycle is used to indicate an average value of the service life consumed by every process from ignition to flameout of the engine throughout the lifecycle of the to-be-predicted urea pump.

In an embodiment, a method for calculating the second degradation duration $T2$ is shown as the following equation (7):

$$T2 = \beta * \Delta\varepsilon = \beta * \frac{RUL10}{d} \quad (7)$$

In equation (7), $\Delta\varepsilon$ represents the service life of the urea pump per driving cycle, $d$ represents the calibrated start-stop count, and $\Delta\varepsilon = \frac{RUL10}{d}$.

In S114, a degradation duration is subtracted from a calibrated remaining service life of the to-be-predicted urea pump to obtain a prediction result of the remaining service life of the urea pump.

In the embodiment, the calibrated remaining service life is obtained by subtracting the operating duration from the preset calibrated service life. The degradation duration includes the first degradation duration and the second degradation duration. It is understood that the prediction result of the remaining service life of the urea pump according to the embodiment is the prediction result of the remaining service life of the to-be-predicted urea pump.

In an embodiment, the prediction result $RUL$ of the remaining service life is a calculated according to the following equation (8):

$$RUL = RUL10 - Ts - T1 - T2 \quad (8)$$

In equation (8), Ts represents the operating duration. It should be noted that there are multiple methods to obtain the operating duration. For example, the cumulative operating duration of the engine is directly obtained as T$s$, or Ts is obtained by $Ts = \frac{Mileage}{50}$ based on the cumulative mileage (*Mileage*) and the average speed (50 km/h) of the engine.

According to the above technical solution, the prediction result $RUL$ of the remaining service life of the urea pump is acquired according to the following equation (9):

$$RUL = RUL10 - Ts - \sum_{j \in \varphi} \alpha_j * \Delta t - \beta * \Delta\varepsilon \quad (9)$$

From the equation (9), it can be seen that the degradation duration in the method for predicting the remaining service life of the urea pump according to the embodiments of the present disclosure includes the first degradation duration and the second degradation duration.

In a first aspect, the first degradation duration (also referred to as a maintenance degradation duration) is equal to the sum of the interval degradation durations of all the target parameter intervals. The target parameter interval is the interval within the historical parameter interval excluding the historical value of the parameter in the maintenance record. The maintenance record includes the value of the parameter corresponding to the maintenance time instant, the interval degradation duration is positively correlated with the first degradation factor (also referred to as the maintenance degradation factor), the first degradation factor is positively correlated with the usage degree, and the usage degree is positively correlated with the usage degree indicated by the parameter interval, that is, the interval degradation duration of the target parameter interval is positively correlated with the usage degree of the to-be-predicted urea pump indicated by the target parameter interval. Therefore, the interval degradation duration is determined based on two factors: the usage degree indicated by the parameter interval and whether to perform maintenance. In an embodiment, if no maintenance is performed within the parameter interval, a higher usage degree (which may be understood as a higher degradation degree) of the to-be-predicted urea pump indicated by the parameter interval indicates a longer interval degradation duration of the parameter interval. It is understood that a longer interval degradation duration of the target parameter interval indicates that the absence of maintenance within the target parameter interval causes a greater impact on the degradation of the service life. Therefore, the first degradation duration, obtained by summing up the interval degradation durations of all the target parameter intervals, represents the degradation duration caused by the maintenance operation affecting the degradation of the service life of the to-be-predicted urea pump. A longer first degradation duration indicates that untimely maintenance causes a more severe degradation of the service life.

In a second aspect, considering the impact of real-time operating conditions, such as a specific altitude and ambient temperature, on the pressure build-up duration, the second degradation duration (also referred to as the second degradation duration) is positively correlated with the second degradation factor (also referred to as an operating condition degradation factor). The second degradation factor is determined based on the pressure build-up duration. When the pressure build-up duration exceeds a preset duration threshold, the pressure build-up duration indicates the impact of different operating conditions on the service life of the to-be-predicted urea pump. A longer pressure build-up duration indicates a larger second degradation factor, indicating a more severe operating condition. Further, a larger second degradation factor indicates a greater impact on the degradation of the service life of the urea pump. Therefore, the second degradation duration indicates the degradation duration caused by the operating condition affecting the degradation of the service life of the to-be-predicted urea pump. A longer second degradation duration indicates a more severe degradation of the service life caused by harsh operating conditions.

Combining the first aspect and the second aspect, compared with the conventional theoretical research on the calibrated service life, the method combines degradation durations from two dimensions (the impact of maintenance operation on the degradation of the service life and the impact of harsh operating conditions on the degradation of the service life), the degradation duration is subtracted from the calibrated remaining service life to obtain the prediction result of the remaining service life, further improving the accuracy and reliability of the prediction result of the remaining service life.

FIG. 2 illustrates a method for generating and sending a preset alarm command in response to a real-time value meeting a preset alarm condition. The method includes the following S21 to S29.

In S21, a mileage is acquired.

In S22, whether a first alarm condition is met is determined based on the mileage and the mileage interval.

In the embodiment, the first alarm condition includes that a parameter interval between the mileage and an upper limit of a real-time mileage interval is less than a preset first interval threshold. The real-time mileage interval is the mileage interval including the mileage.

For example, a regular maintenance mileage M is equal to 60000 kilometers, indicating that the engine requires maintenance every 60000 kilometers. Therefore, an i-th mileage interval is [(i-1)×60000, i×60000]. The first interval threshold k1 is equal to 600 kilometers. If the mileage S1 is equal to 59600 kilometers, obviously belonging to the first mileage interval, and thus [0, 60000] is the real-time mileage interval for S1. The parameter interval between the mileage and the upper limit of the real-time mileage interval is 400 kilometers, which is less than the preset first interval threshold k1, thus meeting the first alarm condition.

It should be noted that the regular maintenance mileage and the first interval threshold are preset according to actual operating conditions. Details are referred to the conventional technology.

In S23, a preset first alarm command is generated and sent in response to meeting the first alarm condition.

In the embodiment, the first alarm command is used to indicate a mileage value between the mileage and the upper limit of the real-time mileage interval.

It should be noted that the detailed content and sending form of the first alarm command are referred to the conventional technology.

In S24, a duration since factory shipment is acquired.

In S25, whether a second alarm condition is met is determined based on the duration since factory shipment and a duration interval since factory shipment.

In the embodiment, the second alarm condition includes that a parameter interval between the duration since factory shipment and an upper limit of a real-time duration interval since factory shipment is less than a preset second interval threshold. The real-time duration interval since factory shipment is the duration interval since factory shipment including the duration since factory shipment.

In S26, a preset second alarm command is generated and sent in response to meeting the second alarm condition.

In the embodiment, the second alarm command is used to indicate the parameter interval between the duration since factory shipment and the upper limit of the real-time duration interval since factory shipment.

In S27, an operating duration is acquired.

In S28, whether a third alarm condition is met is determined based on the operating duration and an operating duration interval.

In the embodiment, the third alarm condition includes that the parameter interval between the operating duration and an upper limit of a real-time operating duration interval is less than a preset third interval threshold. The real-time operating duration interval is the operating duration interval including the operating duration.

In S29, a preset third alarm command is generated and sent in response to meeting the third alarm condition.

In the embodiment, the third alarm command is used to indicate the parameter interval between the operating duration and the upper limit of the real-time operating duration interval.

In the embodiment, S21 to S23, S24 to S26 and S27 to S29 are performed in parallel. Detailed implementation methods of S24 to S26 and S27 to S29 are referred to S21 to S23.

It should be noted that real-time values (including the mileage, the operating duration and the duration since factory shipment) may be acquired through a vehicle networking system in which a communication link is pre-established. The detailed acquisition method is referred to the conventional technology. The mileage, the operating duration, the pressure value of the urea pump or other data in the vehicle networking system is transmitted back in a real-time manner, forming a core data support for the service life prediction algorithm in the present disclosure along with the maintenance record.

According to the above technical solution, an alarm mechanism according to the embodiments of the present disclosure, based on the parameter interval and a real-time value of a parameter, timely gives an alarm in response to the real-time value of the parameter meeting the alarm condition, which is conducive to the timely maintenance and ensures the reliability of the engine.

It should be noted that the process shown in FIG. 1 is merely an implementation according to the embodiments of the present disclosure.

For example, in an embodiment, the interval within the historical parameter interval including the historical value of the parameter in the maintenance record is determined as the maintenance parameter interval. The method for calculating the prediction result of the remaining service life is shown as the following equation (10):

$$RUL = RUL10\text{-}Ts - \sum_{i=1}^{n} D_i * \alpha_i * \Delta t - \beta * \Delta \varepsilon \quad (10)$$

In equation (10), $D_i$ represents a dummy variable of $\alpha_i$. If the parameter interval with usage degree i is the target parameter interval, the value of $D_i$ is 1. If the parameter interval with usage degree i is the maintenance parameter interval, the value of $D_i$ is 0. It should be noted that the calculation method for parameters in equation (10) is referred to the above embodiments.

For example, in some embodiments, the method further includes: monitoring a start-stop count.

The implementation method for acquiring the prediction result of the remaining service life includes the following steps A1 to A2.

In A1, the degradation duration is subtracted from the calibrated remaining service life to obtain the prediction result of the remaining service life in response to the start-stop count not exceeding a preset calibrated start-stop count, as detailed in S114.

In A2, the prediction result of the remaining service life is acquired based on the start-stop count and the difference obtained by subtracting the degradation duration from the calibrated remaining service life in response to the start-stop count exceeding the preset calibrated start-stop count.

In an embodiment, a remaining start-stop count is obtained based on the start-stop count. In the embodiment, the remaining start-stop count is obtained based on the start-stop count according to the following equation (11):

$$RUL_{start/stop\_cycles} = Total_{start/stop\_cycles} - \text{Count}_{start/stop\_cycles} \quad (11)$$

In equation (11), $RUL_{start/stop\_cycles}$ represents the remaining start-stop count. $Total_{start/stop\_cycles}$ represents the preset calibrated start-stop count, which is $d$ in the above embodiment, indicating a maximum value of the start-stop count of normal operation throughout the lifecycle of the to-be-predicted urea pump. Similar to the calibrated service life, $Total_{start/stop\_cycles}$ may be calibrated and corrected based on historical fault data of urea pump products, which is referred to the conventional technology. $Count_{start/stop\_cycles}$ represents the start-stop count, indicating the number of the start-stop count already executed by the to-be-predicted urea pump, that is, the real-time start-stop count.

In the embodiment, a product of the remaining start-stop count and the service life of the urea pump per driving cycle may be determined as the start-stop remaining service life, and a weighted sum of the start-stop remaining service life and the prediction result in S114 is calculated to obtain the prediction result of the remaining service life. It should be noted that weights of the start-stop remaining service life and the prediction result in S114 are preset according to actual requirements.

In summary, according to the present disclosure, the degradation of the to-be-predicted urea pump is comprehensively considered from two dimensions: the degradation duration and the start-stop count, further improving the accuracy of the prediction result of the remaining service life of the to-be-predicted urea pump.

For example, FIG. 2 illustrates one implementation for alarm monitoring based on the real-time value of the parameter and the preset alarm condition according to the present disclosure. As shown in FIG. 2, S21 to S23, S24 to S26 and S27 to S29 are separately cyclically performed based on a detection cycle according to the present disclosure.

For example, the method further includes: sending a preset service life alarm command in response to the prediction result of the remaining service life meeting a service life alarm condition. The service life alarm condition includes that the prediction result is less than a preset service life threshold. The service life alarm command is used to indicate that the remaining service life is less than the service life threshold. For example, the remaining service life of the to-be-predicted urea pump is less than 3000 kilometers.

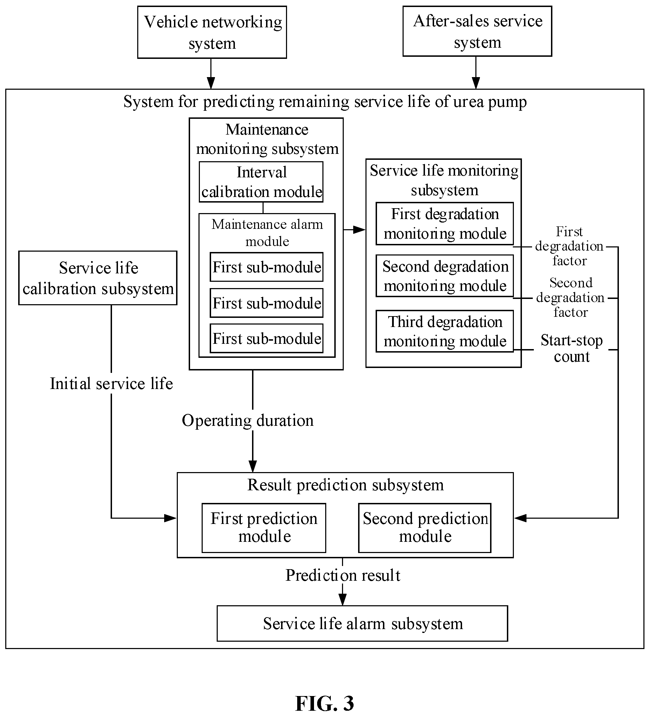

FIG. 3 illustrates a schematic structural diagram of a system for predicting a remaining service life of a urea pump. As shown in FIG. 3, the system includes a service life calibration subsystem, a maintenance monitoring subsystem, a service life monitoring subsystem, a result prediction subsystem, and a service life alarm subsystem.

The service life calibration subsystem is configured to acquire a calibrated service life. Details of the method for acquiring the calibrated service life are referred to S11 to S12.

The maintenance monitoring subsystem includes an interval calibration module, and a maintenance alarm module. The interval calibration module is configured to acquire a preset parameter interval and a usage degree of each parameter interval, as detailed in S13.

The maintenance alarm module is configured to perform S14.

The maintenance alarm module includes a first sub-module, a second sub-module, and a third sub-module. The first sub-module is configured to cyclically perform S21 to S23. The second sub-module is configured to cyclically perform S24 to S26. The third sub-module is configured to cyclically perform S27 to S29.

The service life monitoring subsystem includes a first degradation monitoring module, a second degradation monitoring module and a third degradation monitoring module. The first degradation monitoring module is configured to acquire the first degradation duration, and detailed functional implementation is referred to S15 to S19. The second degradation monitoring module is configured to acquire the second degradation duration, and the detailed functional implementation is referred to S110 to S113. The third degradation monitoring module is configured to acquire the start-stop count.

The result prediction subsystem includes a first prediction module and a second prediction module. The first prediction module is configured to subtract the degradation duration from the calibrated remaining service life to obtain the prediction result of the remaining service life in response to the start-stop count not exceeding the preset calibrated start-stop count, as described in S114. The second prediction module is configured to acquire the prediction result of the remaining service life based on the start-stop count and the difference obtained by subtracting the degradation duration from the calibrated remaining service life in response to the start-stop count exceeding the preset calibrated start-stop count, as described in A2.

The service life alarm subsystem is configured to determine whether the prediction result of the remaining service life of the to-be-predicted urea pump meets the service life alarm condition, and send the service life alarm command in response to the prediction result of the remaining service life of the to-be-predicted urea pump meeting the service life alarm condition.

It should be noted that FIG. 3 only illustrates a schematic structural diagram of the system for predicting the remaining service life of the to-be-predicted urea pump. As shown in FIG. 3, the system pre-establishes a data interaction link with the vehicle networking system to acquire various vehicle condition parameters from the vehicle networking system. The vehicle condition parameters include parameters, the pressure build-up duration, the start-stop count and the like. The system pre-establishes a data interaction link with the product after-sales service system to acquire the maintenance record from the product after-sales service system. Further, it should be noted that data interactions between subsystems may be implemented according to the flowchart shown in FIG. 1 and the arrows shown in FIG. 3.

For example, the maintenance monitoring condition further includes monitoring no increase in the maintenance record within a preset time period after sending the alarm command.

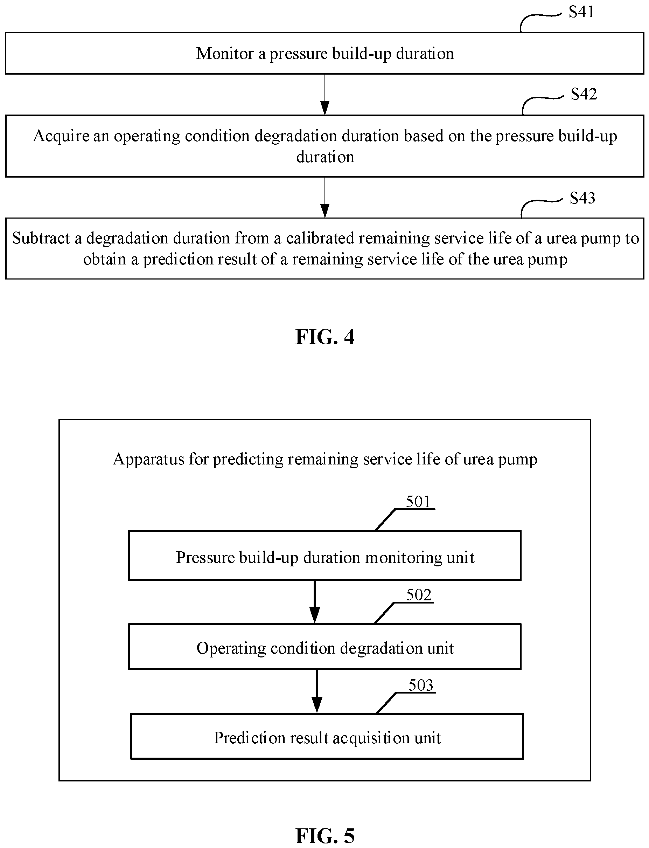

In summary, the method for predicting the remaining service life of the urea pump according to the embodiments of the present disclosure is summarized as the method shown in FIG. 4, including the following S41 to S43.

In S41, a pressure build-up duration is monitored.

In the embodiment, the pressure build-up duration is a duration of a successful pressure build-up process during a latest driving cycle of an engine provided with the urea pump, and the successful pressure build-up process is a process during which a pump pressure value of the urea pump increases from a first preset value to a second preset value.

It should be noted that the first preset value and the second preset value are acquired based on historical data. In the embodiment, the first preset value and the second preset value are determined based on a correspondence between a change (including a duration, a speed, or the like) of the pump pressure value of the urea pump during historical cycles and an actual operating condition. In an embodiment, the first preset value is equal to 12 bar, and the second preset value is equal to 15 bar.

In S42, an operating condition degradation duration is acquired based on the pressure build-up duration.

In the embodiment, the operating condition degradation duration is positively correlated with the pressure build-up duration.

It should be noted that there are multiple implementation methods for acquiring the operating condition degradation duration based on the pressure build-up duration. For example, the operating condition degradation duration is positively correlated with the pressure build-up duration. In another example, an implementation method for acquiring the operating condition degradation duration may be referred to the above embodiments, which is not repeated here.

In S43, a degradation duration is subtracted from a calibrated remaining service life of the urea pump to obtain a prediction result of the remaining service life of the urea pump.

In the embodiment, the calibrated remaining service life is obtained by subtracting an operating duration of the urea pump from a calibrated service life of the urea pump, and the degradation duration includes the operating condition degradation duration.

It should be noted that the remaining service life of the urea pump refers to the remaining service life of the urea pump.

It can be seen from the above technical solution that with the method for predicting a remaining service life of a urea pump according to the embodiments of the present disclosure, the pressure build-up duration is a duration of a successful pressure build-up process during a latest driving cycle of an engine provided with the urea pump, and the successful pressure build-up process is a process during which a pump pressure value of the urea pump increases from a first preset value to a second preset value. It can be seen that a longer pressure build-up duration indicates a greater degree of degradation for the service life of the urea pump caused by an operating condition. The operating condition degradation duration is positively correlated with the pressure build-up duration, and thus a longer operating condition degradation duration indicates a greater degree of degradation for the service life of the urea pump caused by the operating condition. Moreover, the calibrated remaining service life is obtained by subtracting an operating duration of the urea pump from a calibrated service life of the urea pump, and the degradation duration includes the operating condition degradation duration. Therefore, the method considers the influence of the operating condition on the degradation of the service life of the urea pump, thus obtaining a highly accurate and highly credible prediction result of the remaining service life of the urea pump.

FIG. 5 shows a schematic structural diagram of an apparatus for predicting a remaining service life of a urea pump according to an embodiment of the present disclosure. As shown in FIG. 5, the apparatus may include a pressure build-up duration monitoring unit 501, an operating condition degradation unit 502 and a prediction result acquisition unit 503. The pressure build-up duration monitoring unit 501 is configured to monitor a pressure build-up duration, where the pressure build-up duration is a duration of a successful pressure build-up process during a latest driving cycle of an engine provided with the urea pump, and the successful pressure build-up process is a process during which a pump pressure value of the urea pump increases from a first preset value to a second preset value. The operating condition degradation unit 502 is configured to acquire an operating condition degradation duration based on the pressure build-up duration, where the operating condition degradation duration is positively correlated with the pressure build-up duration. The prediction result acquisition unit 503 is configured to subtract a degradation duration from a calibrated remaining service life of the urea pump to obtain a prediction result of the remaining service life of the urea pump, where the calibrated remaining service life is obtained by subtracting an operating duration of the urea pump from a calibrated service life of the urea pump, and the degradation duration includes the operating condition degradation duration.

In an embodiment, for acquiring the operating condition degradation duration based on the pressure build-up duration, the operating condition degradation unit is further configured to:

acquire a set of historical pressure build-up durations, where the historical pressure build-up durations are durations of successful pressure build-up processes during historical driving cycles of the engine;

determine a historical pressure build-up duration corresponding to a preset quantile in the set of the historical pressure build-up durations as a pressure build-up threshold; and

acquire the operating condition degradation duration based on the pressure build-up duration in response to the pressure build-up duration exceeding the pressure build-up threshold.

In an embodiment, for acquiring the operating condition degradation duration based on the pressure build-up duration in response to the pressure build-up duration exceeding the pressure build-up threshold, the operating condition degradation unit is further configured to:

acquire an operating condition degradation factor based on the pressure build-up duration, where the operating condition degradation factor is positively correlated with the pressure build-up duration; and

determine a product of the operating condition degradation factor and a service life of the urea pump per driving cycle as the operating condition degradation duration, where the service life of the urea pump per driving cycle is determined

EP 4 538 509 A1

based on the calibrated service life and a preset calibrated start-stop count, and the calibrated start-stop count indicates a maximum value of the start-stop count throughout a lifecycle of the urea pump.

In an embodiment, the apparatus further includes a service life calibration unit, configured to acquire a B10 service life of the urea pump and correct the B10 service life based on a Weibull distribution function and historical data to obtain the calibrated service life of the urea pump.

In an embodiment, the degradation duration further includes a maintenance degradation duration, and the apparatus further includes a maintenance degradation unit, configured to:

acquire a preset parameter interval, where the parameter interval includes at least one of a mileage interval, an operating duration interval and a duration interval since factory shipment, and any one of the parameter intervals indicate a usage degree of the urea pump;

determine an interval within a historical parameter interval excluding a value of a parameter in a maintenance record as a target parameter interval, where the historical parameter interval includes an interval with an upper limit less than a real-time value, and the maintenance record includes the value of the parameter corresponding to a maintenance time instant;

determine a maintenance degradation factor of the target parameter interval based on the usage degree indicated by the target parameter interval, where the maintenance degradation factor is positively correlated with the usage degree;

determine an interval degradation duration of the target parameter interval based on the maintenance degradation factor of the target parameter interval; and

sum up the interval degradation durations of all the target parameter intervals to obtain the maintenance degradation duration.

In an embodiment, for determining an interval within a historical parameter interval excluding a value of a parameter in a maintenance record as a target parameter interval, the maintenance degradation unit is further configured to:

monitor the real-time value of the parameter, where the parameter includes at least one of a mileage, the operating duration and a duration since factory shipment;

acquire the maintenance record in response to the real-time value of any one of the parameters reaching the upper limit of the corresponding parameter interval; and

determine the interval within the historical parameter interval excluding the value of the parameter in the maintenance record as the target parameter interval.

In an embodiment, the apparatus further includes an alarm unit, configured to generate and send a preset alarm command in response to the real-time value of the parameter meeting a preset alarm condition, where the alarm condition includes that the parameter interval between the real-time value of the parameter and an upper limit of a real-time parameter interval is less than a preset interval threshold, and the real-time parameter interval is a parameter interval including the real-time value of the parameter.

In an embodiment, for determining a maintenance degradation factor of the target parameter interval based on the usage degree indicated by the target parameter interval, the maintenance degradation unit is further configured to:

sort the parameter intervals based on the upper limits of the intervals in an ascending order to obtain an interval sequence, and determine an ordinal position of the target parameter interval within the interval sequence as the usage degree of the target parameter interval; and

acquire the maintenance degradation factor of the target parameter interval based on the usage degree of the target parameter interval, where the maintenance degradation factor is positively correlated with the usage degree.

In an embodiment, the apparatus further includes a start-stop monitoring unit, configured to monitor a real-time start-stop count of the urea pump, and for subtracting a degradation duration from a calibrated remaining service life of the urea pump to obtain a prediction result of the remaining service life of the urea pump, the prediction result acquisition unit is further configured to:

subtract the degradation duration from the calibrated remaining service life of the urea pump to obtain the prediction result of the remaining service life of the urea pump in response to the real-time start-stop count of the urea pump not exceeding the calibrated start-stop count.

In an embodiment, the prediction result acquisition unit is further configured to: acquire the prediction result of the remaining service life of the urea pump based on the real-time start-stop count of the urea pump and a difference obtained by subtracting the degradation duration from the calibrated remaining service life in response to the real-time start-stop count exceeding the calibrated start-stop count.

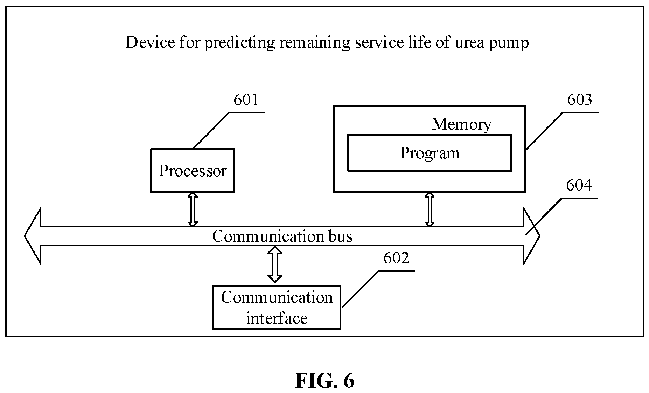

FIG. 6 shows a schematic structural diagram of a device for predicting a remaining service life of a urea pump. The device may include at least one processor 601, at least one communication interface 602, at least one memory 603, and at least one communication bus 604.

In the embodiments of the present disclosure, the number of the processor 601, the number of the communication interface 602, the number of the memory 603, and the number of the communication bus 604 each are at least one, and the processor 601, the communication interface 602, and the memory 603 communicate with each other via the communication bus 604.

The processor 601 may be a central processing unit (CPU), an application-specific integrated circuit (ASIC), or one or more integrated circuits configured to implement the embodiments of the present disclosure.

The memory 603 may include a high-speed RAM memory, or may include a non-volatile memory or the like, such as at least one disk memory.

The memory stores a program, and the processor executes the program stored in the memory to perform the method for predicting a remaining service life of a urea pump according to the embodiments of the present disclosure, as follows.

A method for predicting a remaining service life of a urea pump includes:

monitoring a pressure build-up duration, where the pressure build-up duration is a duration of a successful pressure build-up process during a latest driving cycle of an engine provided with the urea pump, and the successful pressure build-up process is a process during which a pump pressure value of the urea pump increases from a first preset value to a second preset value;

acquiring an operating condition degradation duration based on the pressure build-up duration, where the operating condition degradation duration is positively correlated with the pressure build-up duration; and

subtracting a degradation duration from a calibrated remaining service life of the urea pump to obtain a prediction result of the remaining service life of the urea pump, where the calibrated remaining service life is obtained by subtracting an operating duration of the urea pump from a calibrated service life of the urea pump, and the degradation duration includes the operating condition degradation duration.

In an embodiment, the acquiring an operating condition degradation duration based on the pressure build-up duration includes:

acquiring a set of historical pressure build-up durations, where the historical pressure build-up durations are durations of successful pressure build-up processes during historical driving cycles of the engine;

determining a historical pressure build-up duration corresponding to a preset quantile in the set of the historical pressure build-up durations as a pressure build-up threshold; and

acquiring the operating condition degradation duration based on the pressure build-up duration in response to the pressure build-up duration exceeding the pressure build-up threshold.

In an embodiment, the acquiring the operating condition degradation duration based on the pressure build-up duration in response to the pressure build-up duration exceeding the pressure build-up threshold includes:

acquiring an operating condition degradation factor based on the pressure build-up duration, where the operating condition degradation factor is positively correlated with the pressure build-up duration; and

determining a product of the operating condition degradation factor and a service life of the urea pump per driving cycle as the operating condition degradation duration, where the service life of the urea pump per driving cycle is determined based on the calibrated service life and a preset calibrated start-stop count, and the calibrated start-stop count indicates a maximum value of the start-stop count throughout a lifecycle of the urea pump.

In an embodiment, the method further includes:

acquiring a B10 service life of the urea pump; and

correcting the B10 service life based on a Weibull distribution function and historical data to obtain the calibrated service life of the urea pump.

In an embodiment, the degradation duration further includes a maintenance degradation duration, and the method further includes:

acquiring a preset parameter interval, where the parameter interval includes at least one of a mileage interval, an operating duration interval and a duration interval since factory shipment, and any one of the parameter intervals indicate a usage degree of the urea pump;

determining an interval within a historical parameter interval excluding a value of a parameter in a maintenance record as a target parameter interval, where the historical parameter interval includes an interval with an upper limit less than a real-time value, and the maintenance record includes the value of the parameter corresponding to a maintenance time instant;

determining a maintenance degradation factor of the target parameter interval based on the usage degree indicated by the target parameter interval, where the maintenance degradation factor is positively correlated with the usage degree;

determining an interval degradation duration of the target parameter interval based on the maintenance degradation factor of the target parameter interval; and

summing up the interval degradation durations of all the target parameter intervals to obtain the maintenance degradation duration.

In an embodiment, the determining an interval within a historical parameter interval excluding a value of a parameter in a maintenance record as a target parameter interval includes:

monitoring the real-time value of the parameter, where the parameter includes at least one of a mileage, the operating duration and a duration since factory shipment;

acquiring the maintenance record in response to the real-time value of any one of the parameters reaching the upper limit of the corresponding parameter interval; and

determining the interval within the historical parameter interval excluding the value of the parameter in the maintenance record as the target parameter interval.

In an embodiment, the method further includes:

generating and sending a preset alarm command in response to the real-time value of the parameter meeting a preset alarm condition, where

the alarm condition includes that the parameter interval between the real-time value of the parameter and an upper limit of a real-time parameter interval is less than a preset interval threshold, and the real-time parameter interval is a parameter interval including the real-time value of the parameter.

In an embodiment, the determining a maintenance degradation factor of the target parameter interval based on the usage degree indicated by the target parameter interval includes:

sorting the parameter intervals based on the upper limits of the intervals in an ascending order to obtain an interval sequence, and determining an ordinal position of the target parameter interval within the interval sequence as the usage degree of the target parameter interval; and

acquiring the maintenance degradation factor of the target parameter interval based on the usage degree of the target parameter interval, where the maintenance degradation factor is positively correlated with the usage degree.

In an embodiment, the method further includes:

monitoring a real-time start-stop count of the urea pump,

where the subtracting a degradation duration from a calibrated remaining service life of the urea pump to obtain a prediction result of the remaining service life of the urea pump includes:

subtracting the degradation duration from the calibrated remaining service life of the urea pump to obtain the prediction result of the remaining service life of the urea pump in response to the real-time start-stop count of the urea pump not exceeding the calibrated start-stop count,

where the method further includes:
acquiring the prediction result of the remaining service life of the urea pump based on the real-time start-stop count of the urea pump and a difference obtained by subtracting the degradation duration from the calibrated remaining service life in response to the real-time start-stop count exceeding the calibrated start-stop count.

A readable storage medium is further provided according to the embodiments of the present disclosure. The readable storage medium stores a computer program applicable to be executed by a processor. The computer program performs, when being executed by the processor, the method for predicting a remaining service life of a urea pump according to the embodiments of the present disclosure, as follows.

A method for predicting a remaining service life of a urea pump includes:

monitoring a pressure build-up duration, where the pressure build-up duration is a duration of a successful pressure build-up process during a latest driving cycle of an engine provided with the urea pump, and the successful pressure build-up process is a process during which a pump pressure value of the urea pump increases from a first preset value to a second preset value;

acquiring an operating condition degradation duration based on the pressure build-up duration, where the operating condition degradation duration is positively correlated with the pressure build-up duration; and

subtracting a degradation duration from a calibrated remaining service life of the urea pump to obtain a prediction result of the remaining service life of the urea pump, where the calibrated remaining service life is obtained by subtracting an operating duration of the urea pump from a calibrated service life of the urea pump, and the degradation duration includes the operating condition degradation duration.

In an embodiment, the acquiring an operating condition degradation duration based on the pressure build-up duration includes:

acquiring a set of historical pressure build-up durations, where the historical pressure build-up durations are durations of successful pressure build-up processes during historical driving cycles of the engine;

determining a historical pressure build-up duration corresponding to a preset quantile in the set of the historical pressure build-up durations as a pressure build-up threshold; and

acquiring the operating condition degradation duration based on the pressure build-up duration in response to the pressure build-up duration exceeding the pressure build-up threshold.

In an embodiment, the acquiring the operating condition degradation duration based on the pressure build-up duration in response to the pressure build-up duration exceeding the pressure build-up threshold includes:

acquiring an operating condition degradation factor based on the pressure build-up duration, where the operating condition degradation factor is positively correlated with the pressure build-up duration; and

determining a product of the operating condition degradation factor and a service life of the urea pump per driving cycle as the operating condition degradation duration, where the service life of the urea pump per driving cycle is determined based on the calibrated service life and a preset calibrated start-stop count, and the calibrated start-stop count indicates a maximum value of the start-stop count throughout a lifecycle of the urea pump.

In an embodiment, the method further includes:

acquiring a B10 service life of the urea pump; and
correcting the B10 service life based on a Weibull distribution function and historical data to obtain the calibrated service life of the urea pump.

In an embodiment, the degradation duration further includes a maintenance degradation duration; and the method further includes:

acquiring a preset parameter interval, where the parameter interval includes at least one of a mileage interval, an operating duration interval and a duration interval since factory shipment, and any one of the parameter intervals indicate a usage degree of the urea pump;

determining an interval within a historical parameter interval excluding a value of a parameter in a maintenance record as a target parameter interval, where the historical parameter interval includes an interval with an upper limit less than a real-time value, and the maintenance record includes the value of the parameter corresponding to a maintenance time instant;

determining a maintenance degradation factor of the target parameter interval based on the usage degree indicated by the target parameter interval, where the maintenance degradation factor is positively correlated with the usage degree;

determining an interval degradation duration of the target parameter interval based on the maintenance degradation factor of the target parameter interval; and

summing up the interval degradation durations of all the target parameter intervals to obtain the maintenance degradation duration.

In an embodiment, the determining an interval within a historical parameter interval excluding a value of a parameter in a maintenance record as a target parameter interval includes:

monitoring the real-time value of the parameter, where the parameter includes at least one of a mileage, the operating duration and a duration since factory shipment;

acquiring the maintenance record in response to the real-time value of any one of the parameters reaching the upper limit of the corresponding parameter interval; and

determining the interval within the historical parameter interval excluding the value of the parameter in the maintenance record as the target parameter interval.

In an embodiment, the method further includes:

generating and sending a preset alarm command in response to the real-time value of the parameter meeting a preset alarm condition, where

the alarm condition includes that the parameter interval between the real-time value of the parameter and an upper limit of a real-time parameter interval is less than a preset interval threshold, and the real-time parameter interval is a parameter interval including the real-time value of the parameter.

In an embodiment, the determining a maintenance degradation factor of the target parameter interval based on the usage degree indicated by the target parameter interval includes:

sorting the parameter intervals based on the upper limits of the intervals in an ascending order to obtain an interval sequence, and determining an ordinal position of the target parameter interval within the interval sequence as the usage degree of the target parameter interval; and

acquiring the maintenance degradation factor of the target parameter interval based on the usage degree of the target parameter interval, where the maintenance degradation factor is positively correlated with the usage degree.

In an embodiment, the method further includes:

monitoring a real-time start-stop count of the urea pump,

where the subtracting a degradation duration from a calibrated remaining service life of the urea pump to obtain a prediction result of the remaining service life of the urea pump includes:

subtracting the degradation duration from the calibrated remaining service life of the urea pump to obtain the prediction result of the remaining service life of the urea pump in response to the real-time start-stop count of the urea pump not exceeding the calibrated start-stop count,

where the method further includes:
acquiring the prediction result of the remaining service life of the urea pump based on the real-time start-stop count of the urea pump and a difference obtained by subtracting the degradation duration from the calibrated remaining service life in response to the real-time start-stop count exceeding the calibrated start-stop count.

Finally, it should also be noted that in the present disclosure, relational terms such as first and second are only used to distinguish one entity or operation from another, and do not necessarily require or imply that any such actual relationship or order exists in these entities or operations. Furthermore, the term "comprise", "include" or any other variation thereof is intended to cover a non-exclusive inclusion, so that a process, a method, an article, or a device including a set of elements includes not only those elements, but also other elements not expressly listed or elements inherent in such a process, method, article, or device. Unless expressively limited, the statement "including a..." does not exclude the case that other similar elements may exist in the process, method, article or device including the series of elements.

The embodiments in the specification are described in a progressive manner, and each embodiment focuses on the difference from other embodiments. Same and similar parts in each embodiment may be referred to each other.

Based on the above description of the disclosed embodiments, those skilled in the art can implement or carry out the present disclosure. It is obvious for those skilled in the art to make many modifications to these embodiments. The general principle defined herein may be applied to other embodiments without departing from the spirit or scope of the present disclosure. Therefore, the present disclosure is not limited to the embodiments illustrated herein, but should be defined by the widest scope consistent with the principle and novel features disclosed herein.

**Claims**

1. A method for predicting a remaining service life of a urea pump, comprising:

monitoring a pressure build-up duration, wherein the pressure build-up duration is a duration of a successful pressure build-up process during a latest driving cycle of an engine provided with the urea pump, and the successful pressure build-up process is a process during which a pump pressure value of the urea pump increases from a first preset value to a second preset value;
acquiring an operating condition degradation duration based on the pressure build-up duration, wherein the operating condition degradation duration is positively correlated with the pressure build-up duration; and
subtracting a degradation duration from a calibrated remaining service life of the urea pump to obtain a prediction result of the remaining service life of the urea pump, wherein the calibrated remaining service life is obtained by subtracting an operating duration of the urea pump from a calibrated service life of the urea pump, and the degradation duration comprises the operating condition degradation duration.

2. The method according to claim 1, wherein the acquiring an operating condition degradation duration based on the pressure build-up duration comprises:

acquiring a set of historical pressure build-up durations, wherein the historical pressure build-up durations are durations of successful pressure build-up processes during historical driving cycles of the engine;

determining a historical pressure build-up duration corresponding to a preset quantile in the set of the historical pressure build-up durations as a pressure build-up threshold; and

acquiring the operating condition degradation duration based on the pressure build-up duration in response to the pressure build-up duration exceeding the pressure build-up threshold.

3. The method according to claim 2, wherein the acquiring the operating condition degradation duration based on the pressure build-up duration in response to the pressure build-up duration exceeding the pressure build-up threshold comprises:

acquiring an operating condition degradation factor based on the pressure build-up duration, wherein the operating condition degradation factor is positively correlated with the pressure build-up duration; and

determining a product of the operating condition degradation factor and a service life of the urea pump per driving cycle as the operating condition degradation duration, wherein the service life of the urea pump per driving cycle is determined based on the calibrated service life and a preset calibrated start-stop count, and the calibrated start-stop count indicates a maximum value of the start-stop count throughout a lifecycle of the urea pump.

4. The method according to claim 1, further comprising:

acquiring a B10 service life of the urea pump; and

correcting the B10 service life based on a Weibull distribution function and historical data to obtain the calibrated service life of the urea pump.

5. The method according to claim 1, wherein the degradation duration further comprises a maintenance degradation duration, and the method further comprises:

acquiring a preset parameter interval, wherein the parameter interval comprises at least one of a mileage interval, an operating duration interval and a duration interval since factory shipment, and any one of the parameter intervals indicate a usage degree of the urea pump;

determining an interval within a historical parameter interval excluding a value of a parameter in a maintenance record as a target parameter interval, wherein the historical parameter interval comprises an interval with an upper limit less than a real-time value, and the maintenance record comprises the value of the parameter corresponding to a maintenance time instant;

determining a maintenance degradation factor of the target parameter interval based on the usage degree indicated by the target parameter interval, wherein the maintenance degradation factor is positively correlated with the usage degree;

determining an interval degradation duration of the target parameter interval based on the maintenance degradation factor of the target parameter interval; and

summing up the interval degradation durations of all the target parameter intervals to obtain the maintenance degradation duration.

6. The method according to claim 5, wherein the determining an interval within a historical parameter interval excluding a value of a parameter in a maintenance record as a target parameter interval comprises:

monitoring the real-time value of the parameter, wherein the parameter comprises at least one of a mileage, the operating duration and a duration since factory shipment;

acquiring the maintenance record in response to the real-time value of any one of the parameters reaching the upper limit of the corresponding parameter interval; and

determining the interval within the historical parameter interval excluding the value of the parameter in the maintenance record as the target parameter interval.

7. The method according to claim 6, further comprising:

generating and sending a preset alarm command in response to the real-time value of the parameter meeting a preset alarm condition, wherein

the alarm condition comprises that the parameter interval between the real-time value of the parameter and an upper limit of a real-time parameter interval is less than a preset interval threshold, and the real-time parameter interval is a parameter interval comprising the real-time value of the parameter.

8. The method according to claim 7, wherein the determining a maintenance degradation factor of the target parameter interval based on the usage degree indicated by the target parameter interval comprises:

sorting the parameter intervals based on the upper limits of the intervals in an ascending order to obtain an interval sequence, and determining an ordinal position of the target parameter interval within the interval sequence as the usage degree of the target parameter interval; and
acquiring the maintenance degradation factor of the target parameter interval based on the usage degree of the target parameter interval, wherein the maintenance degradation factor is positively correlated with the usage degree.

9. The method according to claim 3, further comprising:

monitoring a real-time start-stop count of the urea pump,
wherein the subtracting a degradation duration from a calibrated remaining service life of the urea pump to obtain a prediction result of the remaining service life of the urea pump comprises:

subtracting the degradation duration from the calibrated remaining service life of the urea pump to obtain the prediction result of the remaining service life of the urea pump in response to the real-time start-stop count of the urea pump not exceeding the calibrated start-stop count,
wherein the method further comprises:
acquiring the prediction result of the remaining service life of the urea pump based on the real-time start-stop count of the urea pump and a difference obtained by subtracting the degradation duration from the calibrated remaining service life in response to the real-time start-stop count exceeding the calibrated start-stop count.

10. An apparatus for predicting a remaining service life of a urea pump, comprising:

a pressure build-up duration monitoring unit, configured to monitor a pressure build-up duration, wherein the pressure build-up duration is a duration of a successful pressure build-up process during a latest driving cycle of an engine provided with the urea pump, and the successful pressure build-up process is a process during which a pump pressure value of the urea pump increases from a first preset value to a second preset value;
an operating condition degradation unit, configured to acquire an operating condition degradation duration based on the pressure build-up duration, wherein the operating condition degradation duration is positively correlated with the pressure build-up duration; and
a prediction result acquisition unit, configured to subtract a degradation duration from a calibrated remaining service life of the urea pump to obtain a prediction result of the remaining service life of the urea pump, wherein the calibrated remaining service life is obtained by subtracting an operating duration of the urea pump from a calibrated service life of the urea pump, and the degradation duration comprises the operating condition degradation duration.

11. A device for predicting a remaining service life of a urea pump, comprising a memory and a processor, wherein

the memory is configured to store a program; and
the processor is configured to execute the program to perform the method for predicting a remaining service life of a urea pump according to any one of claims 1 to 9.

12. A readable storage medium storing a computer program, wherein the computer program performs, when being executed by a processor, the method for predicting a remaining service life of a urea pump according to any one of claims 1 to 9.

FIG. 1

S21

Acquire a mileage

S22

Determine whether a first alarm condition is met based on the mileage and a mileage interval

S23

Generate and send a preset first alarm command in response to meeting the first alarm condition

S27

Acquire an operating duration

S28

Determine whether a third alarm condition is met based on the operating duration and an operating duration interval

S29

Generate and send a preset third alarm command in response to meeting the third alarm condition

S24

Acquire a duration since factory shipment

S25

Determine whether a second alarm condition is met based on the duration since factory shipment and a duration interval since factory shipment

S26

Generate and send a preset second alarm command in response to meeting the second alarm condition

**FIG. 2**

FIG. 3

S41

Monitor a pressure build-up duration

S42

Acquire an operating condition degradation duration based on the pressure build-up duration

S43

Subtract a degradation duration from a calibrated remaining service life of a urea pump to obtain a prediction result of a remaining service life of the urea pump

**FIG. 4**

Apparatus for predicting remaining service life of urea pump

501

Pressure build-up duration monitoring unit

502

Operating condition degradation unit

503

Prediction result acquisition unit

**FIG. 5**

Device for predicting remaining service life of urea pump

601

Processor

Memory

603

Program

604

Communication bus

602

Communication
interface

**FIG. 6**

<div align="center">

**INTERNATIONAL SEARCH REPORT**

</div>

| | International application No. |
|---|---|
| | **PCT/CN2022/091373** |

| A. | CLASSIFICATION OF SUBJECT MATTER |
|---|---|

F01N 11/00(2006.01)i; F01N 3/20(2006.01)i

According to International Patent Classification (IPC) or to both national classification and IPC

| B. | FIELDS SEARCHED |
|---|---|

Minimum documentation searched (classification system followed by classification symbols)

    F01N

Documentation searched other than minimum documentation to the extent that such documents are included in the fields searched

Electronic data base consulted during the international search (name of data base and, where practicable, search terms used)

    CNTXT; ENTXTC; ENTXT, DWPI, CNKI: 泵, 尿素, 寿命, pump, urea, life

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 111794842 A (WEICHAI POWER CO., LTD.) 20 October 2020 (2020-10-20) claims 1 and 7 | 1-12 |
| A | CN 110020472 A (NO.36 RESEARCH INSTITUTE OF CETC) 16 July 2019 (2019-07-16) entire document | 1-12 |
| A | WO 2019174142 A1 (SHANDONG UNIVERSITY OF SCIENCE AND TECHNOLOGY) 19 September 2019 (2019-09-19) entire document | 1-12 |
| A | CN 110284953 A (WEICHAI POWER CO., LTD.) 27 September 2019 (2019-09-27) entire document | 1-12 |
| A | CN 113958390 A (WEICHAI POWER CO., LTD.) 21 January 2022 (2022-01-21) entire document | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **03 January 2023** | **20 January 2023** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/091373**

| Patent document cited in search report | | | Publication date (day/month/year) | Patent family member(s) | | | Publication date (day/month/year) |
|---|---|---|---|---|---|---|---|
| CN | 111794842 | A | 20 October 2020 | None | | | |
| CN | 110020472 | A | 16 July 2019 | None | | | |
| WO | 2019174142 | A1 | 19 September 2019 | CN | 108629073 | A | 09 October 2018 |
| | | | | US | 2021048807 | A1 | 18 February 2021 |
| CN | 110284953 | A | 27 September 2019 | None | | | |
| CN | 113958390 | A | 21 January 2022 | None | | | |

Form PCT/ISA/210 (patent family annex) (January 2015)